# EUROPEAN PATENT SPECIFICATION

(11) **EP 1 843 607 B1**
(45) Date of publication and mention of the grant of the patent: **27.07.2011**
(21) Application number: 05823415.4
(22) Date of filing: 16.12.2005
(51) Int. Cl.: H04L 29/06

(54) **SYSTEM OF MOBILE GAME ON-LINE AND METHOD FOR COMMUNICATION BETWEEN MOBILE GAME TERMINALS**
SYSTEM ZUM MOBILSPIEL ONLINE UND VERFAHREN ZUR KOMMUNIKATION ZWISCHEN MOBILEN SPIELENDGERÄTEN
SYSTEME DE JEU MOBILE EN LIGNE ET PROCEDE DE COMMUNICATION ENTRE TERMINAUX DE JEUX MOBILES

(30) Priority: 29.12.2004 CN 200410104104
(43) Date of publication of application: 10.10.2007
(73) Proprietor: Huawei Technologies Co., Ltd., Longgang District, Shenzhen Guangdong 518129 (CN)
(72) Inventor: JIAO, Jingmin, Huawei Administration Building, Shenzhen Guangdong 518129 (CN); LIU, Qian, Huawei Administration Building, Guangdong (CN); ZHONG, Jieping, Huawei Administration Building, Shenzhen Guangdong 518129 (CN); HUANG, Hongsen, Huawei Administration Building, Guangdong (CN); TANG, Jie, Huawei Administration Building, Shenzhen Guangdong 518129 (CN); ZHANG, Yupeng, Huawei Administration Building, Shenzhen Guangdong 518129 (CN); CHEN, Shaobing, Huawei Administration Building, Guangdong (CN)
(74) Representative: Kreuz, Georg Maria
(86) International application number: PCT/CN2005/002226
(87) International publication number: WO 2006/069521

(56) References cited:
- GB-A- 2 375 009
- GB-A- 2 399 992
- US-A1- 2002 035 594
- US-A1- 2003 105 812
- US-A1- 2003 217 158

## Description

### Field of the Invention

The present invention relates to the field of mobile online game services, and particularly, to a system of mobile online game and a method for communicating between mobile game terminals.

### Background of the Invention

At present, a mobile online game system mainly includes a game platform and mobile game terminals. The game platform is used for providing users with a series of such services as game service release, parallel operation of multiple game services, discovery of the user of a game service, process control of game operation, charging of the user account. The mobile game terminal provides a game platform for users to access and an operating platform for users to play games.

In the existing mobile online game system, the data interaction between a game platform and numerous mobile game terminals is implemented through a communication network which is huge. The mobile game terminal mainly includes a game application unit, which forwards the data generated by the game operation to a Mobile Game Platform (MGP) of the game platform for corresponding processing. The game platform primarily includes the MGP, which receives the data sent from a mobile game terminal through a communication network, and performs the corresponding processing according to the type of the data received by the MGP The data sent from the mobile game terminal to the MGP primarily include two parts; one part is core data for game logic processing, system management ,billing, and etc, and the core data is the main part of the game platform service, and needs corresponding analysis or processing by the MGP; the other part is communication data between the mobile game terminals such as interaction data of voice or text etc, and the communication data is sent from an originating mobile game terminal and forwarded through the MGP to a destination mobile game terminal.

Flowers John et al discloses in US 2003105612 that a broker device is used to help an originating peer device to establish a P2P connection with a destination peer device. The broker only functions as a forwarder between the originating peer device and the destination peer device to help the originating peer device and the destination peer device to exchange their port numbers.

Datta Glen Van discloses in US 2003217158 a method of dynamically change communication configurations during an online session of a multi-user application is disclosed. The communication configurations include a client-server configuration and a Peer-to-Peer configuration. However, Datta Glen Van does not teach of suggest how the Peer-to-Peer configuration is established.

The inventors found in the inventing processes that in the above processes, the MGP does not perform any processing to the communication data between the mobile game terminals, but only acts as a forwarder. Although the data forwarding is not the main service of the game platform, the system resource is limited after all, so along with the user group of game platform becoming huger and huger, even the service of just forwarding data through the game platform may consume considerable system resources, which lead to a heavy load of service processing for the game platform. Since the communication between the mobile terminals is performed by the data forwarding via the game platform, the interaction periods are prolonged, the communication rate is decreased, and the efficiency and effect of operation of the whole mobile online game system are affected. US 2002/0061743 A1 is directed to a method and system for controlling the state of an interactive application and controlling delivery of the interactive application to one or more users. The provided system is a system for delivering an interactive application to one or more users of a communications network and may comprise an interactive application adapted to the communications network; a user access device adapted to receive said interactive application; control means for establishing parameters under which said interactive application is rendered on said user access device; and mediation means for establishing terms for the interaction between the at least one user and other users and the communications network.

### Summary of the Invention

The present invention could be realized relates through the following to a mobile online game system, a method for communicating between mobile game terminals, a mobile game terminal, a game platform and computer readable storage medium as defined by the respective independent claims. Favorable embodiments are described by the dependent claims. Embodiments of the present invention provide a mobile online game system, including:
a first mobile game terminal, a second mobile game terminal and a game platform, in which the first mobile game terminal is adapted to send identifier (ID) information of the second mobile game terminal to the game platform, acquire a Peer-to-Peer (P2P) communication address of the second mobile game terminal from the game platform, create a P2P connection with the second mobile game terminal according to the P2P communication address of the second mobile game terminal, and after the P2P connection is created, determine whether the data generated by a game operation needs to be transmitted via the P2P connection, if the data generated by the game operation needs to be transmitted via the P2P connection, send the data to a P2P application unit the second mobile game terminal via the P2P connection,, otherwise, send the data to the game platform; and
the game platform is adapted to store P2P registration information of mobile game terminals, the P2P registration information of mobile game terminals including the P2P communication addresses of the mobile game terminals, get the P2P communication address of the second mobile game terminal according to the ID information of the second mobile game terminal received from the first mobile game terminal, and return the P2P communication address of the second mobile game terminal to the first mobile game terminal.

Optionally, the first mobile game terminal is further adapted to, if determined that the data generated by the game operation is communication data or the data generated by the game operation carries information representing that the data generated by the game operation needs to be transmitted via the P2P connection, determine the data generated by the game operation needs to be transmitted via the P2P connection, send the data generated by the game operation to the second mobile game terminal via the P2P connection, and receive data from the second mobile game terminal via the P2P connection.

Optionally, the P2P registration information further includes authentication information of the mobile game terminals; and
the game platform is further adapted to, when the game platform determines that the first mobile game terminal has right to create the P2P connection with the second mobile game terminal according to the P2P registration information, return the P2P communication address of the second mobile game terminal to the first mobile game terminal.

Embodiments of the present invention provide as well a method for communicating between the mobile game terminals which includes:
a step of sending, by a first mobile game terminal, a P2P connection creating request to a game platform, the P2P connection creating request carrying identifier (ID) information of the first mobile game terminal and ID information of a second mobile game terminal so as to make the game platform acquire the P2P communication address of the second mobile game terminal according to the ID information of the second mobile game terminal carried in the received P2P connection creating request;
a step of receiving, by the first mobile game terminal, a response containing the P2P communication address of the second mobile game terminal from the game platform;
a step of creating, by the first mobile game terminal, a P2P connection with the second mobile game terminal according to the acquired P2P communication address of the second mobile game terminal;
a step of after the P2P connection is created, determining, by the first mobile game terminal, whether the data generated by a game operation needs to be transmitted via the P2P connection, if the data generated by the game operation needs to be transmitted via the P2P connection, sending the data generated by the game operation to a P2P application unit included in the first mobile game terminal, and otherwise, sending the data generated by the game operation to the game platform; in which the P2P application unit is adapted to perform data interaction between the first mobile game terminal and the second mobile game terminal via the P2P connection.

Optionally, the step of determining that the first mobile game terminal has right to create the P2P connection with the second mobile game terminal includes:
a step of acquiring P2P registration information of the second mobile game terminal according to the ID information of the second mobile game terminal for P2P connection;
a step of upon determining that the P2P registration information contains record information representing that the second mobile game terminal is willing to create a P2P connection with the first mobile game terminal; determining that the first mobile game terminal has right to create the P2P connection with the second mobile game terminal.

Optionally, the step of sending by the first mobile game terminal the P2P connection creating request to the game platform includes:
sending, by the first mobile game terminal, the P2P connection creating request to the game platform upon receiving a P2P connection creating instruction.

Optionally, the process of determining that the data generated by the game operation needs to be transmitted via the P2P connection further includes:
a step of upon determining that the data generated by the game operation carries information representing that the data needs to be transmitted via the P2P connection or the data generated by the game operation is communication data, determining that the data generated by the game operation needs to be transmitted via the P2P connection.

Embodiments of the present invention provide as well a mobile game terminal, including a game application unit and a P2P application unit, in which :
the game application unit is adapted to send identifier (ID) information of a second mobile game terminal to a game platform, the game application unit is further adapted to send a P2P communication address of the second mobile game terminal to the P2P application unit;
the P2P application unit is adapted to create a P2P connection with the second mobile game terminal according to the P2P communication address of the second mobile game terminal received from the game application unit;
after the P2P connection is created, the game application unit is further adapted to determine whether data generated by a game operation needs to be transmitted via the P2P connection, if determined that the data generated by the game operation needs to be transmitted via the P2P connection, send the data to the P2P application unit which is adapted to perform data interaction between mobile game terminals via the P2P connection, and otherwise, send the data generated by the game operation to the game platform; and
the P2P application unit is further adapted to send the data received from the game application unit to the second mobile game terminal via the P2P connection, receive data from the second mobile game terminal via the P2P connection, and send the data received from the second mobile game terminal to the game application unit.

Embodiments of the present invention provide as well a game platform, which is adapted to interact with the mobile game terminal defined above, the game system including:
an MGP, adapted to receive identifier information (ID) information of a second mobile game terminal from a first mobile game terminal, the MGP is further adapted to send the ID information of the second mobile game terminal to a P2P management unit, and send a P2P communication address of the second mobile game terminal to the first mobile game terminal;
a database, adapted to store P2P registration information of mobile game terminals, and the P2P registration information of mobile game terminals includes the P2P communication addresses of the mobile game terminals;
the P2P management unit, adapted to get from the database the P2P communication address of the second mobile game terminal according to the ID information of the second mobile game terminal received from the MGP, and return the P2P communication address of the second mobile game terminal to the MGP.

Optionally, the P2P management unit includes:
a database query unit, adapted to read from the database the P2P communication address of the second mobile game terminal according to the ID information of the second mobile game terminal, and return the P2P communication address of the second mobile game terminal to the MGP.
Optionally, the P2P registration information of mobile game terminals includes authentication information of mobile game terminals;
the P2P management unit further includes:
   an authentication interface unit, adapted to read from the database P2P registration information of the second mobile game terminal according the ID information of the second mobile game terminal, determine that the first mobile game terminal has right to create the P2P connection with the second mobile game terminal, and get the P2P communication address of the second mobile game terminal.

Optionally, the P2P management unit further includes:
a database query unit, adapted to receive a query instruction sent by the authentication interface unit, read from the database the P2P registration information of the second mobile game terminal, and send the P2P registration information to the authentication interface unit.

Embodiments of the present invention also provide computer readable storage mediums which include computer program code means to execute the steps of the method for communication between mobile game terminals in the present invention.
Embodiments of the invention also provide a computer readable storage medium, including computer program code means which when executed by a computer unit enables the computer unit to:
send identifier (ID) information of a second mobile game terminal to a game platform;
create a P2P connection with the second mobile game terminal according to the P2P communication address of the second mobile game terminal;
after the P2P connection is created, determine whether data generated by a game operation needs to be transmitted via the P2P connection; and
if determined that the data generated by the game operation needs to be transmitted via the P2P connection, send the data generated by the game operation to the second mobile game terminal via the P2P connection, and otherwise, send the data generated by the game operation to the game platform.

To sum up, in embodiments of the present invention, a first mobile game terminal originating a communication acquires the P2P communication address of a second mobile game terminal from a game platform, creates a P2P connection with the second mobile game terminal, i.e. the destination mobile game terminal, and communicates with the second mobile game terminal via the P2P connection. It may be seen that embodiments of the present invention do not need the game platform to forward data, which makes it is possible that the rate and efficiency of data interaction between the mobile game terminals are improved, the periods of data interaction are shortened, and the data processing load on the game platform is released, so that the running efficiency of the whole mobile online game system is thus improved.

### Brief Description of the Drawings

Figure 1 is a block diagram illustrating a structure of the mobile online game system in accordance with an embodiment of the present invention.

Figure 2 is an overall flowchart illustrating the method for communicating between the mobile game terminals in accordance with embodiments of the present invention.

Figure 3 is a flowchart of a method for communicating between mobile game terminals in accordance with the first embodiment of the present invention.

Figure 4 is a flowchart of a method for communicating between mobile game terminals in accordance with the second embodiment of the present invention.

Figure 5 is a flowchart of a method for communicating between mobile game terminals in accordance with the third embodiment of the present invention.

### Detailed description of the invention

This invention is hereinafter further described in details with reference to the accompanying drawings so as to further clarify the technical schemes.

According to an embodiment of the present invention, a first mobile game terminal acquires the P2P communication address of a second mobile game terminal from a game platform, and creates a P2P connection with the second mobile game terminal according to the P2P communication address; the first mobile game terminal communicates with the second mobile game terminal via the P2P connection.

In the following descriptions, the originating mobile game terminal is equivalent to the first mobile game terminal, and the destination mobile game terminal is equivalent to the second mobile game terminal.

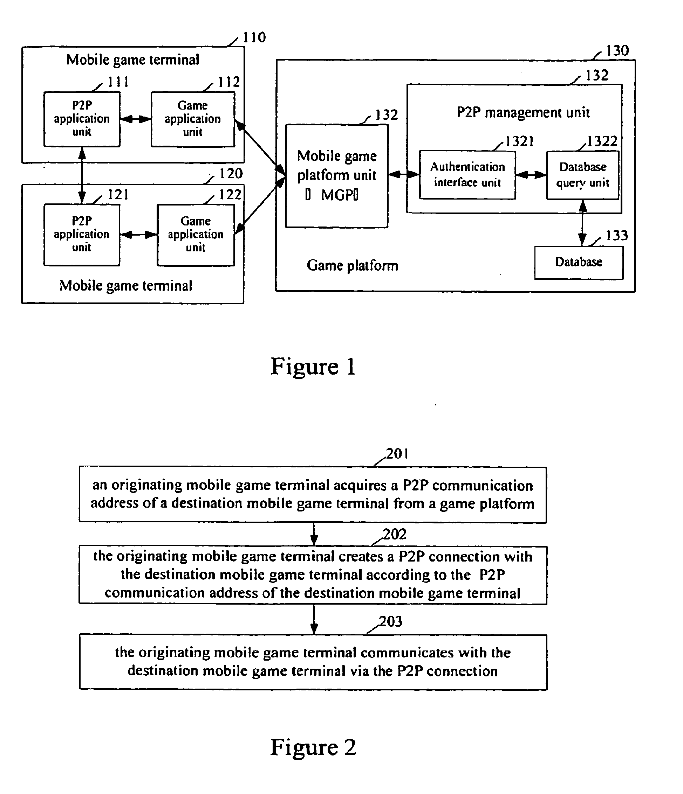

As shown in Figure 1, which illustrates the structure of a mobile online game system; the system mainly includes a game platform 130 and multiple mobile game terminals 110 and 120.

Each mobile game terminal 110 or 120 includes a game application unit 112 or 122 and a P2P application unit 111 or 121. The game application unit 112 or 122 is used for sending a P2P connection creating request to an MGP 131, upon receiving a response from the MGP 131, sending a P2P connection creating instruction to the P2P application unit; and after the P2P connection is created, determining whether the data generated by a game operation needs to be transmitted via the P2P connection, if the data needs to be transmitted, sending the data to the P2P application unit 111 or 121, otherwise, sending the data to the MGP 131; in addition, the game application unit 112 or 122 is still used for receiving data from the other mobile game terminals 120 or 110 sent by the P2P application unit 122 or 112 of the other mobile game terminal 120 or 110. The P2P application unit 111 or 121, upon receiving the P2P connection creating instruction from the game application unit 112 or 122, creating a P2P connection with the destination mobile game terminal, and performing the data interaction with the other mobile game terminals via the P2P connection.

The P2P connection creating request sent by the game application unit to the MGP includes identifier (ID) information of the destination mobile game terminal, and the response from the MGP to the originating mobile game terminal includes the communication address of the destination mobile game terminal. And the communication network protocol corresponding to the created P2P connection may be the Transmission Control Protocol/Internet Protocol (TCP/IP) etc, the corresponding P2P communication address of the mobile game terminal is based on the TCP/IP as well.

The game platform 130 includes an MGP 131, a database 133, and a P2P management unit 132. The MGP 131 is used for receiving the P2P connection creating request sent by an originating mobile game terminal 110 or 120, and sending the P2P connection creating request to a P2P management unit 132, and receiving a response returned from the P2P management unit 132, then forwarding the response returned from the P2P management unit 132 to the originating mobile game terminal 110 or 120. The database 133 is used for storing P2P registration information of mobile game terminals. The P2P management unit 132 is used for reading the P2P registration information of the destination mobile game terminal stored in the database 133 according to identifier in the P2P connection creating request from the MGP 131, and sending the response from the P2P management unit 132 to the MGP 131. The P2P registration information mainly includes the communication address of the destination mobile game terminal. The allocation of the communication address of the mobile game terminal i.e. the IP address, is controlled by the wireless network communication system, and the communication address of the mobile game terminal loading each time on the MGP 131 may be different. Thus the information of the communication address of the mobile game terminal stored in the database 133 is updated each time when the mobile game terminal loads on the game platform 130.

A first optional proposal is that the P2P management unit may include a database query unit 1322, which is used for, upon receiving the P2P connection creating request forwarded by the MGP 131, reading the P2P registration information of the destination mobile game terminal stored in the database 133, and returning to the MGP 131 a response carrying the communication address of the destination mobile game terminal. In this proposal, the P2P registration information mainly includes the communication address of the destination mobile game terminal.

A second optional proposal is that the P2P management unit may include an authentication interface unit 1321, which is used for, upon receiving the P2P connection creating request forwarded by the MGP 131, reading the P2P registration information of the destination mobile game terminal stored in the database 133, implementing authentication of the mobile game terminal, and when the authentication succeeds, returning to the MGP 131 an authentication success response carrying the communication address of the destination mobile game terminal. In this proposal, the P2P registration information includes the communication address of the destination mobile game terminal, and authentication information such as the record information provided upon registering representing whether the destination mobile game terminal is willing to create a P2P connection with the originating mobile game terminal etc.

A third optional proposal is that the P2P management unit may include both an authentication interface unit 1321 and a database query unit 1322. The authentication interface unit 1321, upon receiving the P2P connection creating request forwarded by the MGP 131, sends a query instruction to the database query unit 1322, and receives the P2P registration information of the mobile game terminal returned by the database query unit 1322, implements authentication of an originating mobile game terminal, and returns a response to the MGP 131. The database query unit 1322, receives the query instruction from the authentication interface unit, reads the P2P registration information of the destination mobile game terminal stored in the database according to the query instruction, and sends the P2P registration information read from the database 133 to the authentication interface unit 131. In this proposal, the P2P registration information includes the communication address of the destination mobile game terminal, and authentication information such as the record information provided upon registering representing whether the destination mobile game terminal is willing to create a P2P connection with the originating mobile game terminal etc.

The structure of the mobile online game system is described hereinbefore according to an embodiment; and description of the method for communicating between the mobile game terminals will be given. The premise of the method in an embodiment of this invention is that: when the game service is running, a communication network port of the P2P application unit, such as TCP/IP port etc, is opened. The whole flow of the method is shown in Figure 2, and the method specifically includes the following processes:

Process 201: an originating mobile game terminal 110 acquires the P2P communication address of a destination mobile game terminal 120 from a game platform 130.

Process 202: the originating mobile game terminal 110 creates a P2P connection with the destination mobile game terminal 120 according to the acquired P2P communication address.

Process 203: the originating mobile game terminal 110 communicates with the destination mobile game terminal 120 via the P2P connection.

Specific exemplary embodiments are described hereinafter with reference to accompanying drawings.

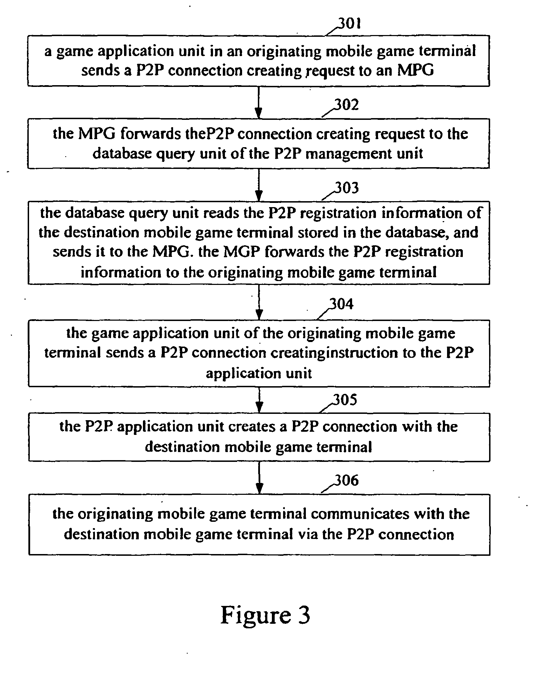

In the first embodiment of the invention, the game platform 130 is the game service platform of the mobile online game system which includes an MGP 131, a database 133, and a P2P management unit 132. The P2P management unit 132 includes a database query unit 1322; and the mobile game terminal 110 or 120 includes a game application unit 112 or 122 and a P2P application unit 111 or 121. As shown in Figure 3, the process of this embodiment specifically includes the following processes:

Process 301: a game application unit 112 in an originating mobile game terminal 110 sends a P2P connection creating request to an MGP 131, and the P2P connection creating request contains the ID information of the originating mobile game terminal 110 and the ID information of the destination mobile game terminal 120. The game application unit 112 may, after receiving a P2P connection creating instruction from a user, send the P2P connection creating request to the MGP 131.

Process 302: the MGP 131, forwards the P2P connection creating request to the database query unit 1322 of the P2P management unit 132.

Process 303: the database query unit 1322 reads, according to the ID information of the destination mobile game terminal 120 carried in the P2P connection creating request, the P2P registration information of the destination mobile game terminal 120 stored in the database 133, and sends to the MGP 131 the P2P registration information read from the database 133. The MGP 131, after receiving the P2P registration information, forwards the P2P registration information to the originating mobile game terminal 110. The P2P registration information mainly includes the P2P communication address of the destination mobile game terminal 120.

Process 304: the game application unit 112 of the originating mobile game terminal 110, after receiving the P2P registration information sent from the MGP 131, sends a P2P connection creating instruction to the P2P application unit 111. The P2P connection creating instruction includes the P2P communication address of the destination mobile game terminal 120.

Process 305: the P2P application unit 111, after receiving the P2P connection creating instruction sent by the game application unit 112, creates a P2P connection with the destination mobile game terminal 120 according to the P2P communication address of the destination mobile game terminal 120 carried in the P2P connection creating instruction.

Process 306: the originating mobile game terminal 110 communicates with the destination mobile game terminal 120 via the P2P connection, and the process ends.

The game application unit 112, after the P2P connection is created, determines whether the data generated by a game operation in the running of game needs to be transmitted via a P2P connection, if the data needs to be transmitted, sends the data to the P2P application unit 111 which forwards the data to the destination mobile game terminal 120 via a P2P connection; otherwise, sends the data to the MGP 131 of the mobile game platform 130 for corresponding processing.

The determining of whether the data generated by a game operation in the running of game needs to be transmitted via a P2P connection is the determining of whether the data generated by the game operation in the running of game is communication data, if the data is communication data, the data needs to be transmitted via a P2P connection; or the data is common game data. Alternatively, information representing the need of the transmission via the P2P connection may be carried by the communication data to be sent to the destination mobile game terminal, so that whether the data needs to be transmitted via a P2P connection may be determined by determining whether the information representing the need of the transmission via the P2P connection is carried by the data.

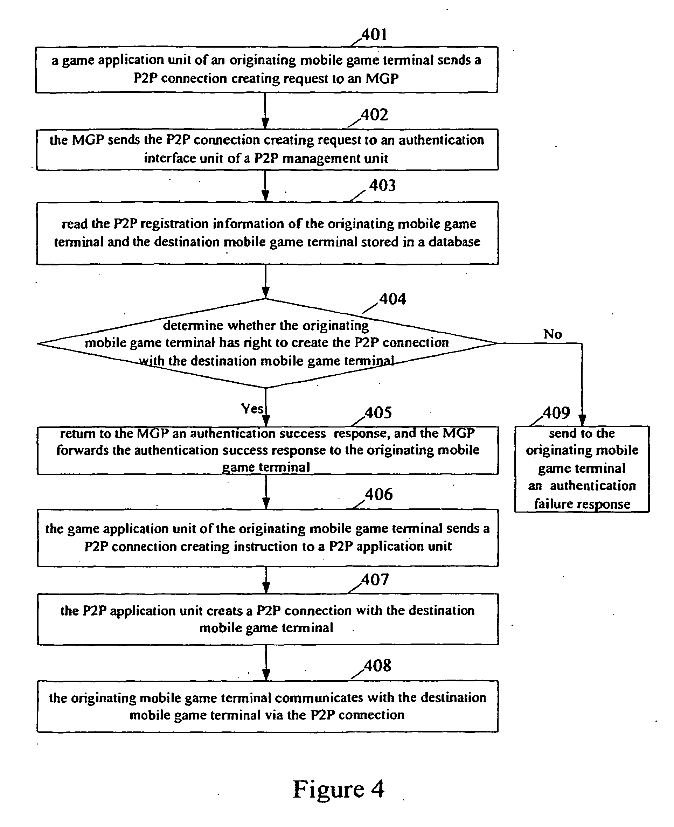

The foregoing description is the first embodiment of the invention, and a second embodiment of the invention will be described hereinafter. In the second embodiment of the invention, the game platform 130 is a game service platform of the mobile online game system including: an MGP 131, a database 133, and a P2P management unit 132 which includes an authentication interface unit 1321; and the mobile game terminal 110 or 120 includes a game application unit 112 or 122 and a P2P application unit 111 or 121. Different to the first embodiment, in this embodiment, the authentication interface unit 1321 of the game platform 130 receives a P2P connection creating request sent by the originating mobile game terminal 110, and queries in the database 133, acquires the P2P registration information according the request for creating a P2P connection from the MGP 131, and implements authentication of the originating mobile game terminal 110. As shown in Figure 4, the process of this embodiment specifically includes the following processes:

Process 401: a game application unit 112 of an originating mobile game terminal 110 sends a P2P connection creating request to an MGP 131, and ID information of an originating mobile game terminal 110 and ID information of a destination mobile game terminal 120 is carried in the request. The game application unit 112 may, after receiving a P2P connection creating instruction from a user, send the P2P connection creating request to the MGP 131.

Process 402: the MGP 131, after receiving the P2P connection creating request, sends the P2P connection creating request to an authentication interface unit 1321 of a P2P management unit 132.

Process 403: the authentication interface unit 1321 of the P2P management unit 132, after receiving the P2P connection creating request, reads, according to the ID information of the originating mobile game terminal 110 and ID information of the destination mobile game terminal 120 carried in the P2P connection creating request, the P2P registration information of the originating mobile game terminal 110 and the destination mobile game terminal 120 stored in a database 133. The P2P registration information mainly includes right information of the originating mobile game terminal 110 and right information of the destination mobile game terminal 130, and the P2P communication address of the destination mobile game terminal 130, etc.

Process 404: the authentication interface unit 1321 determines whether the originating mobile game terminal 110 has right to create a P2P connection with the destination mobile game terminal 120 according to the P2P registration information read from the database 133, if the originating mobile game terminal 110 has the right, the process continues to Process 405; otherwise, the process jumps to Process 409.

The determining of whether the originating mobile game terminal 110 has right to create the P2P connection with the destination mobile game terminal 120 may include: determining whether the P2P registration information of the destination mobile game terminal 120 includes record information representing that the destination mobile game terminal 120 is willing to create a P2P connection with the originating mobile game terminal 110, if the record information is included, determining that the originating mobile game terminal 110 has right to create the P2P connection with the destination mobile game terminal 120; otherwise, determining that the originating mobile game terminal 110 does not have the right.

Process 405: the authentication interface unit 1321 returns to the MGP131 an authentication success response for creating a P2P connection, and the MGP 131 forwards the authentication success response to the originating mobile game terminal 110, and the P2P communication address of the destination mobile game terminal 120 is carried in the authentication success response.

Process 406: the game application unit 112 of the originating mobile game terminal 110, after receiving the authentication success response sent by the MGP 131, sends a P2P connection creating instruction to a P2P application unit 111. The P2P connection creating instruction contains the P2P communication address of the destination mobile game terminal 120.

Process 407: the P2P application unit 111, after receiving the P2P connection creating instruction, creates a P2P connection with the destination mobile game terminal 120 according to the P2P communication address of the destination mobile game terminal 120.

Process 408: the originating mobile game terminal 110 communicates with the destination mobile game terminal 120 via the P2P connection, and the process ends.

Furthermore, after the P2P connection is created, the game application unit 112 determines whether the data generated by a game operation in the running of game needs to be transmitted via the P2P connection, if the data needs to be transmitted, sends the data to the P2P application unit 111 which forwards the data to the destination mobile game terminal 120 via a P2P connection; otherwise, sends the data to the MGP 131 of the mobile game platform 130. To determine whether the data generated by a game operation in the running of game needs to be transmitted to the destination mobile game terminal 120 via the P2P connection is to determine whether the data generated by the game operation in the running of game is communication data, if the data is communication data, determines that the data needs to be transmitted via the P2P connection, otherwise, determines that the data is common game data. Alternatively, information representing the need of the transmission via the P2P connection may be carried by the communication data sent to the destination mobile game terminal, so that whether the data needs to be transmitted via a P2P connection may be determined by determining whether the data carries the information representing the need of the transmission via the P2P connection.

Process 409: the authentication interface unit 1321 returns to the MGP131 an authentication failure response for creating a P2P connection, and the MGP 131 forwards the authentication failure response to the originating mobile game terminal 110, and the process ends.

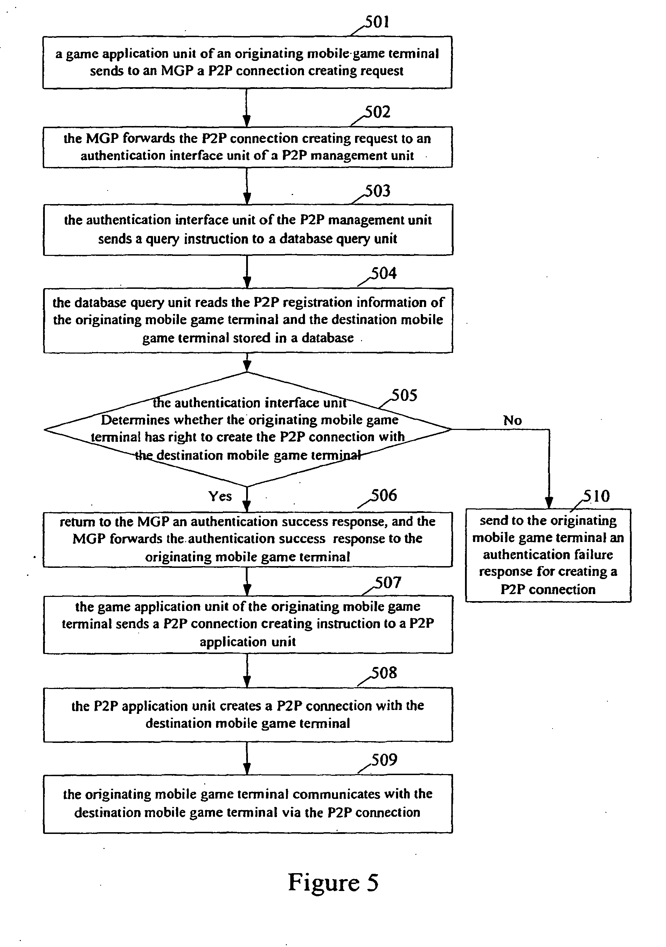

The foregoing description is the second embodiment of the invention, and a third embodiment of the invention will be given hereinafter. In the third embodiment of the method, the game platform 130 is a game service platform of the mobile online game system including: an MGP 131, a database 133, and a P2P management unit 132 which includes an authentication interface unit 1321 and a database query unit 1322; and the mobile game terminal 110 or 120 includes a game application unit 112 or 122 and a P2P application unit 111 or 121. Different to the second embodiment, in this embodiment, after receiving a P2P connection creating request sent from the originating mobile game terminal 110, rather than querying the database directly, the authentication interface unit 1321 of the game platform 130 sends a query instruction to a database query unit 1322 connected with the database 133; and the database query unit 1322, after receiving the query instruction, reads the P2P registration information stored in the database 133, and sends the P2P registration information read from the database 133 to the authentication interface unit 1321; the authentication interface unit 1321 implements authentication of the originating mobile game terminal110. As shown in Figure 5, the process of the embodiment specifically includes the following processes:

Process 501: a game application unit 112 of an originating mobile game terminal 110 sends a P2P connection creating request to an MGP 131, and ID information of an originating mobile game terminal 110 and a destination mobile game terminal 120 is carried in the P2P connection creating request. The game application unit 112 may send the P2P connection creating request to the MGP 131 after receiving a P2P connection creating instruction from a user.

Process 502: the MGP 131, after receiving the P2P connection creating request, forwards the P2P connection creating request to an authentication interface unit 1321 of a P2P management unit 132.

Process 503: the authentication interface unit 1321 of the P2P management unit 132, after receiving the P2P connection creating request, sends a query instruction to a database query unit 1322 of the P2P management unit 132, and the ID information of the originating mobile game terminal 110 and the destination mobile game terminal 120 is contained in the query instruction.

Process 504: the database query unit 1322, after receiving the query instruction, reads the P2P registration information stored in a database 133, and sends the P2P registration information read from the database 133 to the authentication interface unit 1321, the P2P registration information mainly includes right information of the originating mobile game terminal 110 and right information of the destination mobile game terminal 120, and P2P communication address of the destination mobile game terminal 120.

Process 505: the authentication interface unit 1321, after receiving the P2P registration information sent by the database query unit 1322, determines whether the originating mobile game terminal 110 has right to create a P2P connection with the destination mobile game terminal 120, if the originating mobile game terminal 110 has the right, the process continues to Process 506; otherwise, the process jumps to Process 510.

The determining of whether the originating mobile game terminal 110 has right to create the P2P connection with the destination mobile game terminal 120 may include: determining whether the P2P registration information includes record information representing that the destination mobile game terminal 120 is willing to create a P2P connection with the originating mobile game terminal 110, if the record information is included, determining that the originating mobile game terminal 110 has right to create the P2P connection with the destination mobile game terminal 120; otherwise, determining that the originating mobile game terminal 110 does not have the right.

Process 506: the authentication interface unit 1321 returns to the MGP 131 an authentication success response, which includes the P2P communication address of the destination mobile game terminal 120, and the MGP 131 forwards the authentication success response to the originating mobile game terminal 110.

Process 507: the game application unit 112 of the originating mobile game terminal 110, after receiving the authentication success response, sends a P2P connection creating instruction to a P2P application unit 111, which includes the P2P communication address of the destination mobile game terminal 120.

Process 508: the P2P application unit 111, after receiving the P2P connection creating instruction sent by the game application unit 112, creates a P2P connection with the destination mobile game terminal 120 according to the P2P communication address of the destination mobile game terminal 120 contained in the P2P connection creating instruction.

Process 509: the originating mobile game terminal 110 communicates with the destination mobile game terminal 120 via the P2P connection, and the process ends.

After the P2P connection is created, the game application unit 112 determines whether the data generated by a game operation in the running of game needs to be transmitted via the P2P connection, if the data needs to be transmitted, sends the data to the P2P application unit which forwards the data to the destination mobile game terminal 120 via the P2P connection; otherwise, sends the data to the MGP 131 of the mobile game platform 130 for corresponding processing. To determine whether the data generated by a game operation in the running of game needs to be transmitted to the destination mobile game terminal 120 via the P2P connection is to determine whether the data generated by the game operation in the running of game is communication data, if the data is communication data, determines that the data needs to be transmitted via the P2P connection, otherwise, determines that the data is common game data. Alternatively, information representing the need of the transmission via the P2P connection may be carried by the communication data sent to the destination mobile game terminal, so that whether the data needs to be transmitted via a P2P connection may be determined by determining whether the data carries the information representing the need of the transmission via the P2P connection.

Process 510: the authentication interface unit 1321 returns to the MGP 131 an authentication failure response for creating a P2P connection, and the MGP 131 forwards the authentication failure response to the originating mobile game terminal 110, and the process ends.

It will be appreciated that the method(s) described in this description may be carried out in software running on processors (not shown), and that the software may be provided as computer program code carried on any suitable computer readable storage medium (also not shown) such as a magnetic or optical computer disc.

It should be appreciated that the foregoing is only preferred embodiments of the invention and is not for use in limiting the invention.

## Claims

1. A mobile online game system, **characterized by** comprising a first mobile game terminal (110), a second mobile game terminal (120) and a game platform (130), wherein
the first mobile game terminal (110) is adapted to send identifier, information of the second mobile game terminal (120) to the game platform (130), acquire (201) a Peer-to-Peer,P2P, communication address of the second mobile game terminal (120) from the game platform (130), create (202) a P2P connection with the second mobile game terminal (120) according to the P2P communication address of the second mobile game terminal (120), and after the P2P connection is created, determine whether the data generated by a game operation needs to be transmitted via the P2P connection, if the data generated by the game operation needs to be transmitted via the P2P connection, send the data to the second mobile game terminal (120) via the P2P connection, otherwise, send the data to the game platform (130); and,
the game platform (130) is adapted to store P2P registration information of mobile game terminals (110, 120), the P2P registration information of mobile game terminals (110, 120) comprising the P2P communication addresses of the mobile game terminals (110, 120), get the P2P communication address of the second mobile game terminal (120) according to the ID information of the second mobile game terminal (120) received from the first mobile game terminal (110), and return the P2P communication address of the second mobile game terminal (120) to the first mobile game terminal (110).

2. The mobile online game system of claim 1, wherein
the first mobile game terminal (110) is further adapted to, if determined that the data generated by the game operation is communication data or the data generated by the game operation carries information representing that the data generated by the game operation needs to be transmitted via the P2P connection, determine the data generated by the game operation needs to be transmitted via the P2P connection, send the data generated by the game operation to the second mobile game terminal (120) via the P2P connection, and receive data from the second mobile game terminal (120) via the P2P connection.

3. The mobile online game system of claim 1 or 2, wherein the P2P registration information further comprises authentication information of the mobile game terminals (110, 120); and
the game platform (130) is further adapted to, when the game platform (130) determines (404) that the first mobile game terminal (110) has right to create the P2P connection with the second mobile game terminal (120) according to the P2P registration information, return (405) the P2P communication address of the second mobile game terminal (120) to the first mobile game terminal (110).

4. A method for communicating between mobile game terminals, **characterized by** comprising:
a step of sending (301), by a first mobile game terminal (110), a P2P connection creating request to a game platform (130), the P2P connection creating request carrying identifier, ID, information of the first mobile game terminal (110) and ID information of a second mobile game terminal (120) so as to make the game platform acquire (302, 303) the P2P communication address of the second mobile game terminal (120) according to the ID information of the second mobile game terminal (120) carried in the received P2P connection creating request;
a step of receiving (303), by the first mobile game terminal (110), a response containing the P2P communication address of the second mobile game terminal (120) from the game platform (130);
a step of creating (202), by the first mobile game terminal (110), a P2P connection with the second mobile game terminal (120) according to the P2P communication address of the second mobile game terminal (120);
a step of after the P2P connection is created, determining, by the first mobile game terminal (110), whether the data generated by a game operation needs to be transmitted via the P2P connection, if the data generated by the game operation needs to be transmitted via the P2P connection, sending the data generated by the game operation to a P2P application unit (111) comprised in the first mobile game terminal (110), and otherwise, sending the data generated by the game operation to the game platform (130); wherein the P2P application unit (111) is adapted to perform data interaction between the first mobile game terminal (110) and the second mobile game terminal (120) via the P2P connection.

5. The method of claim 4, wherein the step of determining that the data generated by the game operation needs to be transmitted via the P2P connection further comprises:
a step of upon determining that the data generated by the game operation carries information representing that the data needs to be transmitted via the P2P connection or the data generated by the game operation is communication data, determining that the data generated by the game operation needs to be transmitted via the P2P connection.

6. The method of claim 4, wherein the step of sending (301) by the first mobile game terminal (110) the P2P connection creating request to the game platform (130) comprises:
spending(301), by the first mobile game terminal (110), the P2P connection creating request to the game platform (130) upon receiving (304) a P2P connection creating instruction.

7. The method of claim 4, wherein the method further comprises:
a step of determining, by the game platform (130), that the first mobile game terminal (110) has right to create the P2P connection with the second mobile game terminal (120) upon receiving the P2P connection creating request; and
a step of returning (405) an authentication success response containing the P2P communication address of the second mobile game terminal (120) to the first mobile game terminal (110).

8. The method of claim 7, wherein the step of determining that the first mobile game terminal (110) has right to create the P2P connection with the second mobile game terminal (120) comprises:
a step of acquiring (403) P2P registration information of the second mobile game terminal (120) according to the ID information of the second mobile game terminal (120) for P2P connection;
a step of upon determining that the P2P registration information contains record information representing that the second mobile game terminal (120) is willing to create the P2P connection with the first mobile game terminal (110); determining (404) that the first mobile game terminal (110) has right to create the P2P connection with the second mobile game terminal (120).

9. A mobile game terminal comprising a game application unit (112) and a P2P application unit (111), whereby
the game application unit (112) is adapted to send identifier, ID, information of a second mobile game terminal (120) to a game platform (130), the game application unit (112) is further adapted to send a P2P communication address of the second mobile game terminal (120) to the P2P application unit (111);
the P2P application unit (111) is adapted to create (202) a P2P connection with the second mobile game terminal (120) according to the P2P communication address of the second mobile game terminal (120) received from the game application unit (112);
after the P2P connection is created, the game application unit (112) is further adapted to determine whether data generated by a game operation needs to be transmitted via the P2P connection, if determined that the data generated by the game operation needs to be transmitted via the P2P connection, send the data to the P2P application unit (111) which is adapted to perform data interaction between mobile game terminals via the P2P connection, and otherwise, send the data generated by the game operation to the game platform (130); and
the P2P application unit (111) is further adapted to send the data received from the game application unit (112) to the second mobile game terminal (120) via the P2P connection, receive data from the second mobile game terminal (120) via the P2P connection, and send the data received from the second mobile game terminal (120) to the game application unit (112).

10. A game platform, which is adapted to interact with the mobile game terminal as defined in claim 9 above, **characterized by** comprising:
a Mobile Game Platform unit, MGP (131), adapted to receive identifier information, ID, information of a second mobile game terminal (120) from a first mobile game terminal (110), the MGP is further adapted to send the ID information of the second mobile game terminal (120) to a P2P management unit (132), and send a P2P communication address of the second mobile game terminal (120) to the first mobile game terminal (110);
a database (133), adapted to store P2P registration information of mobile game terminals (110, 120), wherein the P2P registration information of mobile game terminals (110, 120) comprises the P2P communication addresses of the mobile game terminals (110, 120);
the P2P management unit (132), adapted to get from the database (133) the P2P communication address of the second mobile game terminal (120) according to the ID information of the second mobile game terminal (120) received from the MGP (131), and return the P2P communication address of the second mobile game terminal (120) to the MGP (131).

11. The game platform of claim 10, wherein the P2P management unit (132) comprises:
a database query unit (1322), adapted to read (303) the P2P communication address of the second mobile game terminal (120) from the database (133) according to the ID information of the second mobile game terminal (120), and return the P2P communication address of the second mobile game terminal (120) to the MGP (131).

12. The game platform of claim 10, wherein the P2P registration information of mobile game terminals (110, 120) comprises authentication information of the mobile game terminals (110, 120);
the P2P management unit (132) further comprises:
an authentication interface unit (1321), adapted to read (503, 504) from the database (133) P2P registration information of the second mobile game terminal (120) according the ID information of the second mobile game terminal (120), determine (505) that the first mobile game terminal (110) has right to create a P2P connection with the second mobile game terminal (120), and get the P2P communication address of the second mobile game terminal (120).

13. The game platform of claim 12, wherein the P2P management unit (132) further comprises:
a database query unit (1322), adapted to receive (503) a query instruction sent by the authentication interface unit (1321), read (504) from the database (133) the P2P registration information of the second mobile game terminal (120), and send the P2P registration information to the authentication interface unit (1321).

14. A computer readable storage medium, **characterized by** comprising computer program code means to execute the steps of the method for communication between mobile game terminals according to any of the claims 4-6.

15. A computer readable storage medium, **characterized by** comprising computer program code means which when executed by a computer unit enables the computer unit to:
send identifier, ID, information of a second mobile game terminal (120) to a game platform (130);
create (202) a P2P connection with the second mobile game terminal (120) according to a P2P communication address of the second mobile game terminal (120) acquired from the game platform (130);
after the P2P connection is created, determine whether data generated by a game operation needs to be transmitted via the P2P connection; and
if determined that the data generated by the game operation needs to be transmitted via the P2P connection, send the data generated by the game operation to the second mobile game terminal (120) via the P2P connection, and otherwise, send the data generated by the game operation to the game platform (130).

16. The computer readable storage medium of claim 15, **characterized by** comprising computer program code means which when executed by computer unit enables the computer unit to:
receive identifier, ID, information of a second mobile game terminal from a first mobile game terminal, send the ID information of the second mobile game terminal, and send a P2P communication address of the second mobile game terminal to the first mobile game terminal;
store P2P registration information of mobile game terminals in a database, wherein the P2P registration information of mobile game terminals comprises the P2P communication addresses of the mobile game terminals; and
get from the database the P2P communication address of the second mobile game terminal according to the ID information of the second mobile game terminal received from the MGP, and return the P2P communication address of the second mobile game terminal to the MGP.

## Patentansprüche

1. Mobil-Online-Spielsystem, **dadurch gekennzeichnet, dass** es ein erstes mobiles Spielendgerät (110), ein zweites mobiles Spielendgerät (120) und eine Spielplattform (130) umfasst, wobei
das erste mobile Spielendgerät (110) dafür ausgelegt ist, Kennungs- bzw. ID-Informationen des zweiten mobilen Spielendgeräts (120) zu der Spielplattform (130) zu senden, eine Peer-zu-Peer- bzw. P2P-Kommunikationsadresse des zweiten mobilen Spielendgeräts (120) von der Spielplattform (130) zu beschaffen (201), eine P2P-Verbindung mit dem zweiten mobilen Spielendgerät (120) gemäß der P2P-Kommunikationsadresse des zweiten mobilen Spielendgeräts (120) zu erzeugen (202) und, nachdem die P2P-Verbindung erzeugt ist, zu bestimmen, ob die durch einen Spielbetrieb erzeugten Daten über die P2P-Verbindung übertragen werden müssen, und wenn die durch den Spielbetrieb erzeugten Daten über die P2P-Verbindung übertragen werden müssen, die Daten über die P2P-Verbindung zu dem zweiten mobilen Spielendgerät (120) zu senden und andernfalls die Daten zu der Spielplattform (130) zu senden; und
die Spielplattform (130) dafür ausgelegt ist, P2P-Registrationsinformationen der mobilen Spielendgeräte (110, 120) zu speichern, wobei die P2P-Registrationsinformationen mobiler Spielendgeräte (110, 120) die P2P-Kommunikationsadressen der mobilen Spielendgeräte (110, 120) umfassen, die P2P-Kommunikationsadresse des zweiten mobilen Spielendgeräts (120) gemäß den von dem ersten mobilen Spielendgerät (110) empfangenen ID-Informationen des zweiten mobilen Spielendgeräts (120) zu erhalten und die P2P-Kommunikationsadresse des zweiten mobilen Spielendgeräts (120) an das erste mobile Spielendgerät (110) zurückzugeben.

2. Mobil-Online-Spielsystem nach Anspruch 1, wobei
das erste mobile Spielendgerät (110) ferner dafür ausgelegt ist, wenn bestimmt wird, dass die durch den Spielbetrieb erzeugten Daten Kommunikationsdaten sind oder die durch den Spielbetrieb erzeugten Daten Informationen führen, die repräsentieren, dass die durch den Spielbetrieb erzeugten Daten über die P2P-Verbindung übertragen werden müssen, zu bestimmen, dass die durch den Spielbetrieb erzeugten Daten über die P2P-Verbindung übertragen werden müssen, die durch den Spielbetrieb erzeugten Daten über die P2P-Verbindung zu dem zweiten mobilen Spielendgerät (120) zu senden und Daten über die P2P-Verbindung von dem zweiten mobilen Spielendgerät (120) zu empfangen.

3. Mobil-Online-Spielsystem nach Anspruch 1 oder 2, wobei die P2P-Registrationsinformationen ferner Authentifikationsinformationen der mobilen Spielendgeräte (110, 120) umfassen; und
die Spielplattform (130) ferner dafür ausgelegt ist, wenn die Spielplattform (130) gemäß den P2P-Registrationsinformationen bestimmt (404), dass das erste mobile Spielendgerät (110) das Recht hat, die P2P-Verbindung mit dem zweiten mobilen Spielendgerät (120) zu erzeugen, die P2P-Kommunikationsadresse des zweiten mobilen Spielendgeräts (120) an das erste mobile Spielendgerät (110) zurückzugeben (405).

4. Verfahren zum Kommunizieren zwischen mobilen Spielendgeräten, **dadurch gekennzeichnet, dass** es Folgendes umfasst:
einen Schritt des Sendens (301) einer P2P-Verbindungserzeugungsanforderung durch ein erstes mobiles Spielendgerät (110) zu einer Spielplattform (130), wobei die P2P-Verbindungserzeugungsanforderung Kennungs- bzw. ID-Informationen des ersten mobilen Spielendgeräts (110) und ID-Informationen eines zweiten mobilen Spielendgeräts (120) führt, um so zu bewirken, dass die Spielplattform die P2P-Kommunikationsadresse des zweiten mobilen Spielendgeräts (120) gemäß den in der empfangenen P2P-Verbindungserzeugungsanforderung geführten ID-Informationen des zweiten mobilen Spielendgeräts (120) beschafft (302, 303);
einen Schritt des Empfangens (303) einer Antwort durch das erste mobile Spielendgerät (110), die die P2P-Kommunikationsadresse des zweiten mobilen Spielendgeräts (120) enthält, von der Spielplattform (130) ;
einen Schritt des Erzeugens (202) einer P2P-Verbindung mit dem zweiten mobilen Spielendgerät (120) durch das erste mobile Spielendgerät (110) gemäß der P2P-Kommunikationsadresse des zweiten mobilen Spielendgeräts (120);
einen Schritt des Bestimmens durch das erste mobile Spielendgerät (110), nachdem die P2P-Verbindung erzeugt ist, ob die durch einen Spielbetrieb erzeugten Daten über die P2P-Verbindung übertragen werden müssen, und wenn die durch den Spielbetrieb erzeugten Daten über die P2P-Verbindung übertragen werden müssen, des Sendens der durch den Spielbetrieb erzeugten Daten zu einer P2P-Anwendungseinheit (111), die in dem ersten mobilen Spielendgerät (110) beinhaltet ist, und andernfalls des Sendens der durch den Spielbetrieb erzeugten Daten zu der Spielplattform (130); wobei die P2P-Anwendungseinheit (111) dafür ausgelegt ist, Dateninteraktion zwischen dem ersten mobilen Spielendgerät (110) und dem zweiten mobilen Spielendgerät (120) über die P2P-Verbindung durchzuführen.

5. Verfahren nach Anspruch 4, wobei der Schritt des Bestimmens, dass die durch den Spielbetrieb erzeugten Daten über die P2P-Verbindung übertragen werden müssen, ferner Folgendes umfasst:
einen Schritt des Bestimmens, auf die Bestimmung hin, dass die durch den Spielbetrieb erzeugten Daten Informationen führen, die repräsentieren, dass die Daten über die P2P-Verbindung übertragen werden müssen, oder die durch den Spielbetrieb erzeugten Daten Kommunikationsdaten sind, dass die durch den Spielbetrieb erzeugten Daten über die P2P-Verbindung übertragen werden müssen.

6. Verfahren nach Anspruch 4, wobei der Schritt des Sendens (301) der P2P-Verbindungserzeugungsanforderung durch das erste mobile Spielendgerät (110) zu der Spielplattform (130) Folgendes umfasst:
Senden (301) der P2P-Verbindungserzeugungsanforderung durch das erste mobile Spielendgerät (110) zu der Spielplattform (130) auf das Empfangen (304) einer P2P-Verbindungserzeugungsanweisung hin.

7. Verfahren nach Anspruch 4, wobei das Verfahren ferner Folgendes umfasst:
einen Schritt des Bestimmens durch die Spielplattform (130), dass das erste mobile Spielendgerät (110) das Recht hat, die P2P-Verbindung mit dem zweiten mobilen Spielendgerät (120) zu erzeugen, auf das Empfangen der P2P-Verbindungserzeugungsanforderung hin; und
einen Schritt des Zurückgebens (405) einer Authentifikations-Erfolgsantwort, die die P2P-Kommunikationsadresse des zweiten mobilen Spielendgeräts (120) enthält, an das erste mobile Spielendgerät (110).

8. Verfahren nach Anspruch 7, wobei der Schritt des Bestimmens, dass das erste mobile Spielendgerät (110) das Recht hat, die P2P-Verbindung mit dem zweiten mobilen Spielendgerät (120) zu erzeugen, Folgendes umfasst:
einen Schritt des Beschaffens (403) von P2P-Registrationsinformationen des zweiten mobilen Spielendgeräts (120) gemäß den ID-Informationen des zweiten mobilen Spielendgeräts (120) zur P2P-Verbindung;
einen Schritt des Bestimmens (404) auf das Bestimmen hin, dass die P2P-Registrationsinformationen Datensatzinformationen enthalten, die repräsentieren,
dass das zweite mobile Spielendgerät (120) gewillt ist, die P2P-Verbindung mit dem ersten mobilen Spielendgerät (110) zu erzeugen, dass das erste mobile Spielendgerät (110) das Recht hat, die P2P-Verbindung mit dem zweiten mobilen Spielendgerät (120) zu erzeugen.

9. Mobiles Spielendgerät, das eine Spielanwendungseinheit (112) und eine P2P-Anwendungseinheit (111) umfasst, wobei
die Spielanwendungseinheit (112) dafür ausgelegt ist, Kennungs- bzw. ID-Informationen eines zweiten mobilen Spielendgeräts (120) zu einer Spielplattform (130) zu senden, und die Spielanwendungseinheit (112) ferner dafür ausgelegt ist, eine P2P-Kommunikationsadresse des zweiten mobilen Spielendgeräts (120) zu der P2P-Anwendungseinheit (111) zu senden;
die P2P-Anwendungseinheit (111) dafür ausgelegt ist, eine P2P-Verbindung mit dem zweiten mobilen Spielendgerät (120) gemäß der von der Spielanwendungseinheit (112) empfangenen P2P-Kommunikationsadresse des zweiten mobilen Spielendgeräts (120) zu erzeugen (202);
die Spielanwendungseinheit (112), nachdem die P2P-Verbindung erzeugt ist, ferner dafür ausgelegt ist zu bestimmen, ob durch einen Spielbetrieb erzeugte Daten über die P2P-Verbindung übertragen werden müssen, und wenn bestimmt wird, dass die durch den Spielbetrieb erzeugten Daten über die P2P-Verbindung übertragen werden müssen, die Daten zu der P2P-Anwendungseinheit (111) zu senden, die dafür ausgelegt ist, Dateninteraktion zwischen mobilen Spielendgeräten über die P2P-Verbindung durchzuführen, und andernfalls die durch den Spielbetrieb erzeugten Daten zu der Spielplattform (130) zu senden; und
die P2P-Anwendungseinheit (111) ferner dafür ausgelegt ist, die von der Spielanwendungseinheit (112) empfangenen Daten über die P2P-Verbindung zu dem zweiten mobilen Spielendgerät (120) zu senden, Daten von dem zweiten mobilen Spielendgerät (120) über die P2P-Verbindung zu empfangen und die von dem zweiten mobilen Spielendgerät (120) empfangenen Daten zu der Spielanwendungseinheit (112) zu senden.

10. Spielplattform, die für Interaktion mit dem im vorhergehenden Anspruch 9 definierten mobilen Spielendgerät ausgelegt ist, **dadurch gekennzeichnet, dass** sie Folgendes umfasst:
eine Mobil-Spielplattformeinheit MGP (131), die dafür ausgelegt ist, Kennungs- bzw. ID-Informationen eines zweiten mobilen Spielendgeräts (120) von einem ersten mobilen Spielendgerät (110) zu empfangen, wobei die MGP ferner dafür ausgelegt ist, die ID-Informationen des zweiten mobilen Spielendgeräts (120) zu einer P2P-Verwaltungseinheit (132) zu senden und eine P2P-Kommunikationsadresse des zweiten mobilen Spielendgeräts (120) zu dem ersten mobilen Spielendgerät (110) zu senden;
eine Datenbank (133), die dafür ausgelegt ist, P2P-Registrationsinformationen der mobilen Spielendgeräte (110, 120) zu speichern, wobei die P2P-Registrationsinformationen der mobilen Spielendgeräte (110, 120) die P2P-Kommunikationsadressen der mobilen Spielendgeräte (110, 120) umfassen;
die P2P-Verwaltungseinheit (132), die dafür ausgelegt ist, von der Datenbank (133) die P2P-Kommunikationsadresse des zweiten mobilen Spielendgeräts (120) gemäß den von der MGP (131) empfangenen ID-Informationen des zweiten mobilen Spielendgeräts (120) zu erhalten und die P2P-Kommunikationsadresse des zweiten mobilen Spielendgeräts (120) an die MGP (131) zurückzugeben.

11. Spielplattform nach Anspruch 10, wobei die P2P-Verwaltungseinheit (132) Folgendes umfasst:
eine Datenbank-Abfrageeinheit (1322), die dafür ausgelegt ist, die P2P-Kommunikationsadresse des zweiten mobilen Spielendgeräts (120) gemäß den ID-Informationen des zweiten mobilen Spielendgeräts (120) aus der Datenbank (133) zu lesen (303) und die P2P-Kommunikationsadresse des zweiten mobilen Spielendgeräts (120) an die MGP (131) zurückzugeben.

12. Spielplattform nach Anspruch 10, wobei die P2P-Registrationsinformationen der mobilen Spielendgeräte (110, 120) Authentifikationsinformationen der mobilen Spielendgeräte (110, 120) umfassen; und
die P2P-Verwaltungseinheit (132) ferner Folgendes umfasst:
eine Authentifikations-Schnittstelleneinheit (1321), die dafür ausgelegt ist, aus der Datenbank (133) P2P-Registrationsinformationen des zweiten mobilen Spielendgeräts (120) gemäß den ID-Informationen des zweiten mobilen Spielendgeräts (120) zu lesen (503, 504), zu bestimmen (505), dass das erste mobile Spielendgerät (110) das Recht hat, eine P2P-Verbindung mit dem zweiten mobilen Spielendgerät (120) zu erzeugen, und die P2P-Kommunikationsadresse des zweiten mobilen Spielendgeräts (120) zu erhalten.

13. Spielplattform nach Anspruch 12, wobei die P2P-Verwaltungseinheit (132) ferner Folgendes umfasst:
eine Datenbank-Abfrageeinheit (1322), die dafür ausgelegt ist, eine durch die Authentifikations-Schnittstelleneinheit (1321) gesendete Abfrageanweisung zu empfangen (503), aus der Datenbank (133) die P2P-Registrationsinformationen des zweiten mobilen Spielendgeräts (120) zu lesen (504) und die P2P-Registrationsinformationen zu der Authentifikations-Schnittstelleneinheit (1321) zu senden.

14. Computerlesbares Speichermedium, **dadurch gekennzeichnet, dass** es Computerprogrammkodemittel zum Ausführen der Schritte des Verfahrens zur Kommunikation zwischen mobilen Spielendgeräten nach einem der Ansprüche 4-6 umfasst.

15. Computerlesbares Speichermedium, **dadurch gekennzeichnet, dass** es Computerprogrammkodemittel umfasst, die, wenn sie durch eine Computereinheit ausgeführt werden, der Computereinheit Folgendes ermöglichen:
Senden von Kennungs- bzw. ID-Informationen eines zweiten mobilen Spielendgeräts (120) zu einer Spielplattform (130);
Erzeugen (202) einer P2P-Verbindung mit dem zweiten mobilen Spielendgerät (120) gemäß einer P2P-Kommunikationsadresse des zweiten mobilen Spielendgeräts (120), die von der Spielplattform (130) beschafft wird;
Bestimmen, ob durch einen Spielbetrieb erzeugte Daten über die P2P-Verbindung übertragen werden müssen, nachdem die P2P-Verbindung erzeugt ist; und
wenn bestimmt wird, dass die durch den Spielbetrieb erzeugten Daten über die P2P-Verbindung übertragen werden müssen, Senden der durch den Spielbetrieb erzeugten Daten zu dem zweiten mobilen Spielendgerät (120) über die P2P-Verbindung und andernfalls Senden der durch den Spielbetrieb erzeugten Daten zu der Spielplattform (130).

16. Computerlesbares Speichermedium nach Anspruch 15, **dadurch gekennzeichnet, dass** es Computerprogrammkodemittel umfasst, die, wenn sie durch eine Computereinheit ausgeführt werden, der Computereinheit Folgendes ermöglichen:
Empfangen von Kennungs- bzw. ID-Informationen eines zweiten mobilen Spielendgeräts von einem ersten mobilen Spielendgerät, Senden der ID-Informationen des zweiten mobilen Spielendgeräts und Senden einer P2P-Kommunikationsadresse des zweiten mobilen Spielendgeräts zu dem ersten mobilen Spielendgerät;
Speichern von P2P-Registrationsinformationen von mobilen Spielendgeräten in einer Datenbank, wobei die P2P-Registrationsinformationen mobiler Spielendgeräte die P2P-Kommunikationsadressen der mobilen Spielendgeräte umfassen; und
Erhalten der P2P-Kommunikationsadresse des zweiten mobilen Spielendgeräts aus der Datenbank gemäß den von der MGP empfangenen ID-Informationen des zweiten mobilen Spielendgeräts und Zurückgeben der P2P-Kommunikationsadresse des zweiten mobilen Spielendgeräts an die MGP.

## Revendications

1. Système de jeu en ligne mobile, **caractérisé en ce qu'**il comprend un premier terminal de jeu mobile (110), un second terminal de jeu mobile (120) et une plate-forme de jeu (130), dans lequel
le premier terminal de jeu mobile (110) est adapté pour envoyer des informations d'identifiant, ID, du second terminal de jeu mobile (120) à la plate-forme de jeu (130), acquérir (201) une adresse de communication entre homologues, P2P, du second terminal de jeu mobile (120) depuis la plate-forme de jeu (130), créer (202) une connexion P2P avec le second terminal de jeu mobile (120) en fonction de l'adresse de communication P2P du second terminal de jeu mobile (120), et après la création de la connexion P2P, déterminer si les données générées par une opération de jeu doivent être transmises ou non par l'intermédiaire de la connexion P2P, si les données générées par l'opération de jeu doivent être transmises par l'intermédiaire de la connexion P2P, envoyer les données au second terminal de jeu mobile (120) par l'intermédiaire de la connexion P2P, dans le cas contraire, envoyer les données à la plate-forme de jeu (130) ; et
la plate-forme de jeu (130) est adaptée pour mémoriser des informations d'enregistrement P2P des terminaux de jeu mobiles (110, 120), les informations d'enregistrement P2P des terminaux de jeu mobiles (110, 120) comprenant les adresses de communication P2P des terminaux de jeu mobiles (110, 120), obtenir l'adresse de communication P2P du second terminal de jeu mobile (120) en fonction des informations d'ID du second terminal de jeu mobile (120) reçues depuis le premier terminal de jeu mobile (110), et renvoyer l'adresse de communication P2P du second terminal de jeu mobile (120) au premier terminal de jeu mobile (110).

2. Système de jeu en ligne mobile selon la revendication 1, dans lequel
le premier terminal de jeu mobile (110), s'il est déterminé que les données générées par l'opération de jeu sont des données de communication ou que les données générées par l'opération de jeu comprennent des informations indiquant que les données générées par l'opération de jeu doivent être transmises par l'intermédiaire de la connexion P2P, est en outre adapté pour déterminer que les données générées par l'opération de jeu doivent être transmises par l'intermédiaire de la connexion P2P, envoyer les données générées par l'opération de jeu au second terminal de jeu mobile (120) par l'intermédiaire de la connexion P2P, et recevoir des données du second terminal de jeu mobile (120) par l'intermédiaire de la connexion P2P.

3. Système de jeu en ligne mobile selon la revendication 1 ou 2, dans lequel les informations d'enregistrement P2P comprennent en outre des informations d'authentification des terminaux de jeu mobiles (110, 120) ; et
la plate-forme de jeu (130), quand la plate-forme de jeu (130) détermine (404) que le premier terminal de jeu mobile (110) a le droit de créer la connexion P2P avec le second terminal de jeu mobile (120) en fonction des informations d'enregistrement P2P, est en outre adaptée pour renvoyer (405) l'adresse de communication P2P du second terminal de jeu mobile (120) au premier terminal de jeu mobile (110).

4. Procédé de communication entre des terminaux de jeu mobiles, **caractérisé en ce qu'**il comprend :
une étape d'envoi (301), par un premier terminal de jeu mobile (110), d'une demande de création de connexion P2P à une plate-forme de jeu (130), la demande de création de connexion P2P portant des informations d'identifiant, ID, du premier terminal de jeu mobile (110) et des informations d'ID d'un second terminal de jeu mobile (120) de façon à ce que la plate-forme de jeu acquière (302, 303) l'adresse de communication P2P du second terminal de jeu mobile (120) en fonction des informations d'ID du second terminal de jeu mobile (120) contenues dans la demande de création de connexion P2P reçue;
une étape de réception (303), par le premier terminal de jeu mobile (110), d'une réponse contenant l'adresse de communication P2P du second terminal de jeu mobile (120), depuis la plate-forme de jeu (130) ;
une étape de création (202), par le premier terminal de jeu mobile (110), d'une connexion P2P avec le second terminal de jeu mobile (120) en fonction de l'adresse de communication P2P du second terminal de jeu mobile (120) ;
une étape, après la création de la connexion P2P, de détermination, par le premier terminal de jeu mobile (110), du fait que les données générées par une opération de jeu doivent être transmises ou non par l'intermédiaire de la connexion P2P, si les données générées par l'opération de jeu doivent être transmises par l'intermédiaire de la connexion P2P, d'envoi des données générées par l'opération de jeu à une unité d'application P2P (111) comprise dans le premier terminal de jeu mobile (110), et
dans le cas contraire, d'envoi des données générées par l'opération de jeu à la plate-forme de jeu (130) ; l'unité d'application P2P (111) étant adaptée pour effectuer une interaction de données entre le premier terminal de jeu mobile (110) et le second terminal de jeu mobile (120) par l'intermédiaire de la connexion P2P.

5. Procédé selon la revendication 4, dans lequel l'étape de détermination du fait que les données générées par l'opération de jeu doivent être transmises par l'intermédiaire de la connexion P2P comprend en outre :
une étape, lors de la détermination du fait que les données générées par l'opération de jeu comprennent des informations indiquant que les données doivent être transmises par l'intermédiaire de la connexion P2P ou que les données générées par l'opération de jeu sont des données de communication, de détermination du fait que les données générées par l'opération de jeu doivent être transmises par l'intermédiaire de la connexion P2P.

6. Procédé selon la revendication 4, dans lequel l'étape d'envoi (301) par le premier terminal de jeu mobile (110) de la demande de création de connexion P2P à la plate-forme de jeu (130) comprend :
l'envoi (301), par le premier terminal de jeu mobile (110), de la demande de création de connexion P2P à la plate-forme de jeu (130) à la réception (304) d'une instruction de création de connexion P2P.

7. Procédé selon la revendication 4, comprenant en outre :
une étape de détermination, par la plate-forme de jeu (130), du fait que le premier terminal de jeu mobile (110) a le droit de créer la connexion P2P avec le second terminal de jeu mobile (120) à la réception de la demande de création de connexion P2P ; et
une étape de renvoi (405) d'une réponse de succès d'authentification contenant l'adresse de communication P2P du second terminal de jeu mobile (120) au premier terminal de jeu mobile (110).

8. Procédé selon la revendication 7, dans lequel l'étape de détermination du fait que le premier terminal de jeu mobile (110) a le droit de créer la connexion P2P avec le second terminal de jeu mobile (120) comprend :
une étape d'acquisition (403) d'informations d'enregistrement P2P du second terminal de jeu mobile (120) en fonction des informations d'ID du second terminal de jeu mobile (120) pour la connexion P2P ;
une étape, lors de la détermination du fait que les informations d'enregistrement P2P contiennent des informations d'enregistrement indiquant que le second terminal de jeu mobile (120) souhaite créer la connexion P2P avec le premier terminal de jeu mobile (110), de détermination (404) du fait que le premier terminal de jeu mobile (110) a le droit de créer la connexion P2P avec le second terminal de jeu mobile (120).

9. Terminal de jeu mobile comprenant une unité d'application de jeu (112) et une unité d'application P2P (111), dans lequel
l'unité d'application de jeu (112) est adaptée pour envoyer des informations d'identifiant, ID, d'un second terminal de jeu mobile (120) à une plate-forme de jeu (130), l'unité d'application de jeu (112) étant adaptée en outre pour envoyer une adresse de communication P2P du second terminal de jeu mobile (120) à l'unité d'application P2P (111) ;
l'unité d'application P2P (111) est adaptée pour créer (202) une connexion P2P avec le second terminal de jeu mobile (120) en fonction de l'adresse de communication P2P du second terminal de jeu mobile (120) reçue depuis l'unité d'application de jeu (112) ;
après la création de la connexion P2P, l'unité d'application de jeu (112) est adaptée en outre pour déterminer si les données générées par une opération de jeu doivent être transmises ou non par l'intermédiaire de la connexion P2P, s'il est déterminé que les données générées par l'opération de jeu doivent être transmises par l'intermédiaire de la connexion P2P, envoyer les données à l'unité d'application P2P (111) qui est adaptée pour effectuer une interaction de données entre les terminaux de jeu mobiles par l'intermédiaire de la connexion P2P, et dans le cas contraire, envoyer les données générées par l'opération de jeu à la plate-forme de jeu (130) ; et
l'unité d'application P2P (111) est adaptée en outre pour envoyer les données reçues depuis l'unité d'application de jeu (112) au second terminal de jeu mobile (120) par l'intermédiaire de la connexion P2P, recevoir les données du second terminal de jeu mobile (120) par l'intermédiaire de la connexion P2P, et envoyer les données reçues du second terminal de jeu mobile (120) à l'unité d'application de jeu (112) .

10. Plate-forme de jeu, adaptée pour interagir avec le terminal de jeu mobile défini à la revendication 9 ci-dessus, **caractérisée en ce qu'**elle comprend :
une unité de Plate-Forme de Jeu Mobile, MGP (131), adaptée pour recevoir des informations d'identifiant, ID, d'un second terminal de jeu mobile (120) depuis un premier terminal de jeu mobile (110), la MGP étant adaptée en outre pour envoyer les informations d'ID du second terminal de jeu mobile (120) à une unité de gestion P2P (132), et envoyer une adresse de communication P2P du second terminal de jeu mobile (120) au premier terminal de jeu mobile (110) ;
une base de données (133), adaptée pour mémoriser des informations d'enregistrement P2P de terminaux de jeu mobiles (110, 120), les informations d'enregistrement P2P de terminaux de jeu mobiles (110, 120) comprenant les adresses de communication P2P des terminaux de jeu mobiles (110, 120) ;
l'unité de gestion P2P (132), adaptée pour obtenir de la base de données (133) l'adresse de communication P2P du second terminal de jeu mobile (120) en fonction des informations d'ID du second terminal de jeu mobile (120) reçues de la MGP (131), et renvoyer l'adresse de communication P2P du second terminal de jeu mobile (120) à la MGP (131).

11. Plate-forme de jeu selon la revendication 10, dans laquelle l'unité de gestion P2P (132) comprend :
une unité d'interrogation de base de données (1322), adaptée pour lire (303) l'adresse de communication P2P du second terminal de jeu mobile (120) depuis la base de données (133) en fonction des informations d'ID du second terminal de jeu mobile (120), et renvoyer l'adresse de communication P2P du second terminal de jeu mobile (120) à la MGP (131).

12. Plate-forme de jeu selon la revendication 10, dans laquelle les informations d'enregistrement P2P de terminaux de jeu mobiles (110, 120) comprennent des informations d'authentification des terminaux de jeu mobiles (110, 120) ;
l'unité de gestion P2P (132) comprend en outre :
une unité d'interface d'authentification (1321), adaptée pour lire (503, 504) depuis la base de données (133) les informations d'enregistrement P2P du second terminal de jeu mobile (120) en fonction des informations d'ID du second terminal de jeu mobile (120), déterminer (505) que le premier terminal de jeu mobile (110) a le droit de créer une connexion P2P avec le second terminal de jeu mobile (120), et obtenir l'adresse de communication P2P du second terminal de jeu mobile (120).

13. Plate-forme de jeu selon la revendication 12, dans laquelle l'unité de gestion P2P (132) comprend en outre :
une unité d'interrogation de base de données (1322), adaptée pour recevoir (503) une instruction d'interrogation envoyée par l'unité d'interface d'authentification (1321), lire (504) depuis la base de données (133) les informations d'enregistrement P2P du second terminal de jeu mobile (120), et envoyer les informations d'enregistrement P2P à l'unité d'interface d'authentification (1321).

14. Support de mémorisation lisible par ordinateur, **caractérisé en ce qu'**il comprend un moyen de code de programme informatique pour exécuter les étapes du procédé de communication entre des terminaux de jeu mobiles selon l'une quelconque des revendications 4 à 6.

15. Support de mémorisation lisible par ordinateur, **caractérisé en ce qu'**il comprend un moyen de code de programme informatique qui, lorsqu'il est exécuté par une unité informatique, permet à l'unité informatique d'exécuter les opérations suivantes :
envoyer des informations d'identifiant, ID, d'un second terminal de jeu mobile (120) à une plate-forme de jeu (130) ;
créer (202) une connexion P2P avec le second terminal de jeu mobile (120) en fonction de l'adresse de communication P2P du second terminal de jeu mobile (120) acquise depuis la plate-forme de jeu (130) ;
après la création de la connexion P2P, déterminer si les données générées par une opération de jeu doivent être transmises ou non par l'intermédiaire de la connexion P2P ; et
s'il est déterminé que les données générées par l'opération de jeu doivent être transmises par l'intermédiaire de la connexion P2P, envoyer les données générées par l'opération de jeu au second terminal de jeu mobile (120) par l'intermédiaire de la connexion P2P, et dans le cas contraire, envoyer les données générées par l'opération de jeu à la plate-forme de jeu (130).

16. Support de mémorisation lisible par ordinateur selon la revendication 15, **caractérisé en ce qu'**il comprend un moyen de code de programme informatique qui, lorsqu'il est exécuté par une unité informatique, permet à l'unité informatique d'exécuter les opérations suivantes :
recevoir des informations d'identifiant, ID, d'un second terminal de jeu mobile depuis un premier terminal de jeu mobile, envoyer les informations d'ID du second terminal de jeu mobile, et envoyer une adresse de communication P2P du second terminal de jeu mobile au premier terminal de jeu mobile ;
mémoriser des informations d'enregistrement P2P des terminaux de jeu mobiles dans une base de données, les informations d'enregistrement P2P des terminaux de jeu mobiles comprenant les adresses de communication P2P des terminaux de jeu mobiles ; et
obtenir depuis la base de données l'adresse de communication P2P du second terminal de jeu mobile en fonction des informations d'ID du second terminal de jeu mobile reçues de la MGP, et renvoyer l'adresse de communication P2P du second terminal de jeu mobile à la MGP.
